(19) Europäisches Patentamt
European Patent Office
Office européen des brevets

(11) **EP 4 317 238 A1**

(12) **EUROPEAN PATENT APPLICATION**
published in accordance with Art. 153(4) EPC

(43) Date of publication:
**07.02.2024 Bulletin 2024/06**

(21) Application number: **22774884.5**

(22) Date of filing: **25.02.2022**

(51) International Patent Classification (IPC):
***C08G 59/56*** *(2006.01)* ***C08J 5/24*** *(2006.01)*

(52) Cooperative Patent Classification (CPC):
**C08G 59/56; C08J 5/24**

(86) International application number:
**PCT/JP2022/007767**

(87) International publication number:
**WO 2022/202086 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2021 JP 2021052290**

(71) Applicant: **MITSUBISHI GAS CHEMICAL COMPANY, INC.**
**Chiyoda-ku**
**Tokyo 100-8324 (JP)**

(72) Inventors:
- **IKEUCHI, Kousuke**
  **Hiratsuka-shi, Kanagawa 254-0016 (JP)**
- **MATSUMOTO, Nobuhiko**
  **Hiratsuka-shi, Kanagawa 254-0016 (JP)**
- **OHNISHI, Nobuyoshi**
  **Tokyo 125-8601 (JP)**
- **WAKAHARA, Daiki**
  **Tokyo 125-8601 (JP)**

(74) Representative: **Vossius & Partner**
**Patentanwälte Rechtsanwälte mbB**
**Siebertstrasse 3**
**81675 München (DE)**

(54) **THERMOSETTING RESIN COMPOSITION, PREPREG, FIBER REINFORCED COMPOSITE MATERIAL, AND HIGH PRESSURE GAS CONTAINER**

(57) Provided are a thermosetting resin composition comprising an adduct resin (X) that is a reaction product of an amine-epoxy resin (A) and an epoxy modifier (B) described below, and an epoxy resin curing agent (C), wherein the adduct resin (X) is a reaction product obtained by reacting 1 to 20 parts by mass of the epoxy modifier (B) with 100 parts by mass of the amine-epoxy resin (A), and a prepreg, a fiber-reinforced composite material, and a high-pressure gas container in which the thermosetting resin composition is used.

Epoxy modifier (B): at least one selected from the group consisting of meta-xylylenediamine, para-xylylenediamine, 4,4'-diaminodiphenylmethane, and 4,4'-diaminodiphenylsulfone.

EP 4 317 238 A1

## Description

### Technical Field

The present invention relates to a thermosetting resin composition, a prepreg in which the thermosetting resin composition is used, a fiber-reinforced composite material in which the prepreg is used, and a high-pressure gas container in which the fiber-reinforced composite material is used.

### Background Art

In recent years, use of environmentally-friendly natural gas vehicles (CNG vehicles) and fuel cell vehicles (FCV) has become more widespread. Fuel cell vehicles are powered by fuel cells in which hydrogen is used as fuel, and thus the establishment of hydrogen stations at which vehicles are filled with hydrogen that is compressed to a high pressure is essential.

Thus far, tanks made of steel have been used as high-pressure gas storage tanks that are used for hydrogen stations for fuel cell vehicles, or in other words, as vehicle-mounted fuel tanks for vehicles such as CNG vehicles and fuel cell vehicles. However, the development of lighter weight high-pressure gas storage tanks in which a resin material is used in the liner, or in the outer layer of the tank, is advancing. Reducing the weight of a vehicle-mounted fuel tank results in merits such as an improvement in the fuel economy of the vehicle in which the fuel tank is mounted.

Use of a resin having gas barrier properties and a fiber reinforced composite material (FRP) in which reinforcing fibers are impregnated with the resin as a resin material constituting a high-pressure gas storage tank is known.

For example, Patent Document 1 discloses a resin liner containing a resin such as nylon as a main material having gas barrier properties and an elastomer containing an additive having hydrogen adsorption performance, and also discloses a high-pressure hydrogen tank having an FRP layer laminated on an outer peripheral surface thereof.

Patent Document 2 discloses a structure including: a cured layer containing a cured product of a resin composition containing mica and a thermosetting resin such as an epoxy monomer that has a mesogenic group in the molecule and can form a smectic structure; and a carbon fiber-containing layer on one or both sides of the cured layer, the structure being a coating of a high-pressure hydrogen storage tank.

### Citation List

#### Patent Documents

Patent Document 1: JP 2010-276146 A
Patent Document 2: WO 2017/175775

### Summary of Invention

#### Technical Problem

The coating of the high-pressure hydrogen storage tank disclosed in Patent Document 2 contains carbon fibers and a cured product of a resin composition containing mica and a thermosetting resin such as an epoxy monomer, and by reinforcing the thermosetting resin with carbon fibers, a high-strength material that can be applied to even a high-pressure hydrogen storage tank is obtained.

However, when the thermosetting resin disclosed in Patent Document 2 is used, the hydrogen gas barrier property is not sufficient, and further improvements are required.

When a fast curing thermosetting resin (composition) is used, the shelf life and the pot life are short, and the workability decreases, which are problems. Further, when such a thermosetting resin (composition) is used to prepare a tow prepreg, the moldability also tends to decrease during filament winding and molding.

An object of the present invention is to provide a thermosetting resin composition with which a tow prepreg can be formed, the tow prepreg having high barrier properties such as a hydrogen gas barrier property, having a shelf life and a pot life that are long, having good workability, and additionally excelling in moldability, and a fiber-reinforced composite material and a high-pressure gas container in which the thermosetting resin composition is used.

Solution to Problem

The present inventors have discovered that the abovementioned problem can be solved by a thermosetting resin composition comprising an adduct resin (X) that is a reaction product of an amine-epoxy resin (A) and a predetermined epoxy modifier (B), and an epoxy resin curing agent (C), wherein the adduct resin (X) is a reaction product obtained by reacting 1 to 20 parts by mass of the epoxy modifier (B) with 100 parts by mass of the amine-epoxy resin (A).
That is, the present invention relates to the following aspects [1] to [4].

[1] A thermosetting resin composition comprising an adduct resin (X) that is a reaction product of an amine-epoxy resin (A) and an epoxy modifier (B) described below, and an epoxy resin curing agent (C),

wherein the adduct resin (X) is a reaction product obtained by reacting 1 to 20 parts by mass of the epoxy modifier (B) with 100 parts by mass of the amine-epoxy resin (A).
Epoxy modifier (B): at least one selected from the group consisting of meta-xylylenediamine, para-xylylenediamine, 4,4'-diaminodiphenylmethane, and 4,4'-diaminodiphenylsulfone.

[2] A prepreg in which reinforcing fibers are impregnated with the thermosetting resin composition described in [1].
[3] A fiber-reinforced composite material that is a cured product of the prepreg described in [2].
[4] A high-pressure gas container in which the fiber-reinforced composite material described in [3] is used.

Advantageous Effects of Invention

According to the present invention, a thermosetting resin composition with which a tow prepreg can be formed can be provided, the tow prepreg having high barrier properties such as a hydrogen gas barrier property, having a shelf life and a pot life that are long, having good workability, and additionally excelling in moldability. The fiber-reinforced composite material in which the thermosetting resin composition of the present invention is used has high gas barrier properties, and for example, is suitable as a material constituting a high-pressure gas container such as a high-pressure gas storage tank.

Brief Description of Drawings

FIG. 1 is a cross-sectional schematic view illustrating an embodiment of a high-pressure gas storage tank that is an example of a high-pressure gas container of the present invention.

Description of Embodiments

[Thermosetting resin composition]

A thermosetting resin composition of the present invention comprises an adduct resin (X) that is a reaction product of an amine-epoxy resin (A) and an epoxy modifier (B) described below, and an epoxy resin curing agent (C), wherein the adduct resin (X) is the reaction product obtained by reacting 1 to 20 parts by mass of the epoxy modifier (B) with 100 parts by mass of the amine-epoxy resin (A).
Epoxy modifier (B): at least one selected from the group consisting of meta-xylylenediamine, para-xylylenediamine, 4,4'-diaminodiphenylmethane, and 4,4'-diaminodiphenylsulfone.
The thermosetting resin composition of the present invention has the constitution described above, and thereby enables a tow prepreg having a shelf life and a pot life that are long, having good workability, and additionally excelling in moldability to be formed as well as enables gas barrier properties such as a hydrogen gas barrier property to be improved in a fiber-reinforced composite material (hereinafter, also referred to simply as a "composite material") that is a cured product of the tow prepreg.
The reason why the thermosetting resin composition of the present invention exhibits the abovementioned effect is not clear, but it is thought that the gas barrier properties can be improved particularly by using the amine-epoxy resin (A). It is presumed that modifying the amine-epoxy resin (A) in advance with a predetermined epoxy modifier (B) at a predetermined ratio to provide the adduct resin (X) makes the curing rate in curing with an epoxy resin curing agent (C) adjusted to fall within an appropriate range without lowering the gas barrier properties derived from the amine-epoxy resin (A), enables the shelf life and the pot life to be improved, and also enables the moldability in forming a tow prepreg to be improved. Particularly, the predetermined epoxy modifier (B) is thought to be unlikely to inhibit the gas barrier properties of the amine-epoxy resin (A).
Hereinafter, the thermosetting resin composition, prepreg, and fiber-reinforced composite material of the present

invention will be described.

<Thermosetting resin composition>

The thermosetting resin composition of the present invention comprises an adduct resin (X) that is a reaction product of an amine-epoxy resin (A) and an epoxy modifier (B) described below, and an epoxy resin curing agent (C), wherein the adduct resin (X) is a reaction product obtained by reacting 1 to 20 parts by mass of the epoxy modifier (B) with 100 parts by mass of the amine-epoxy resin (A).

Epoxy modifier (B): at least one selected from the group consisting of meta-xylylenediamine, para-xylylenediamine, 4,4'-diaminodiphenylmethane, and 4,4'-diaminodiphenylsulfone.

(Amine-epoxy resin (A))

The amine-epoxy resin (A) (hereinafter, also referred to simply as a "component (A)") is not particularly limited as long as it is a polyfunctional epoxy resin having an amino group, but a polyfunctional epoxy resin containing an aromatic ring or an alicyclic structure in the molecule is preferred when consideration is given to the expression of high gas barrier properties.

Specific examples of the amine-epoxy resin (A) include at least one resin selected from epoxy resins having a glycidylamino group derived from meta-xylylenediamine, epoxy resins having a glycidylamino group derived from para-xylylenediamine, epoxy resins having a glycidylamino group derived from 1,3-bis(aminomethyl) cyclohexane, epoxy resins having a glycidylamino group derived from 1,4-bis(aminomethyl) cyclohexane, epoxy resins having a glycidylamino group derived from diaminodiphenylmethane, and epoxy resins having a glycidylamino group derived from a para-aminophenol. In order to improve various performance aspects such as flexibility, impact resistance, and moist heat resistance, two or more types of the epoxy resins described above may be mixed at appropriate ratios and used.

In addition, from the viewpoint of gas barrier properties, the amine-epoxy resin (A) preferably has a skeleton represented by General Formula (1) below.

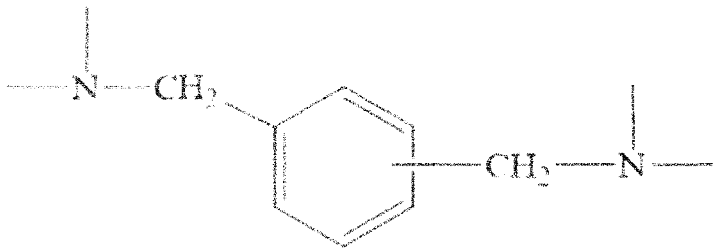
(1)

Further, from the viewpoint of gas barrier properties, the amine-epoxy resin (A) is preferably one having, as a main component, at least one component selected from the group consisting of an epoxy resin having a glycidylamino group derived from meta-xylylenediamine and an epoxy resin having a glycidylamino group derived from para-xylylenediamine, and is more preferably one having, as a main component, an epoxy resin having a glycidylamino group derived from meta-xylylenediamine.

Note that "main component" here means that other components may be included within a range that does not depart from the spirit of the present invention, and also means a component that is included in an amount of preferably from 50 to 100 mass%, more preferably from 70 to 100 mass%, and even more preferably from 90 to 100 mass% relative to the total amount.

(Epoxy modifier (B))

The epoxy modifier (B) used in the present invention (hereinafter, also referred to simply as a "component (B)") is, from the viewpoint of obtaining a tow prepreg excelling in moldability without lowering the gas barrier properties of the amine-epoxy resin (A), at least one selected from the group consisting of meta-xylylenediamine (MXDA), para-xylylenediamine (PXDA), 4,4'-diaminodiphenylmethane (4,4'-DDM), and 4,4'-diaminodiphenylsulfone (4,4'-DDS). The component (B) is preferably at least one selected from the group consisting of meta-xylylenediamine and 4,4'-diaminodiphenylmethane from the viewpoint of achieving both gas barrier properties and flexibility, and is more preferably 4,4'-diaminodiphenylmethane from the viewpoint of gas barrier properties, flexibility, shelf life and pot life, and low viscosity.

[Adduct resin (X)]

The adduct resin (X) is a reaction product of the component (A) and the component (B). Reacting the component (A) and the component (B) in advance with each other to form an adduct resin (X) makes the viscosity of the thermosetting resin composition easily adjusted to be a viscosity suitable for preparation of a prepreg and enables the moldability in forming a tow prepreg to be improved. In addition, reacting some of the functional groups of the component (A) in advance with the component (B) enables the curing rate in curing with an epoxy resin curing agent (C) described below adjusted to fall within an appropriate range, enables the shelf life and pot life to be improved as well as enables the amount of heat generated in the curing reaction to be suppressed adequately and makes the safety of the work easily ensured.

The reaction between the component (A) and the component (B) is carried out by mixing the component (A) and the component (B) under conditions of preferably 0 to 100°C and more preferably 0 to 70°C and then carrying out an addition reaction while stirring the component (A) and the component (B) preferably under an inert gas atmosphere and more preferably under a nitrogen atmosphere, under conditions of preferably 30 to 180°C and more preferably 30 to 150°C for preferably 1 to 24 hours and more preferably 1 to 15 hours.

The adduct resin (X) is a reaction product obtained by reacting 1 to 20 parts by mass, more preferably 1 to 15 parts by mass, even more preferably 1 to 12 parts by mass, yet even more preferably 1 to 8 parts by mass, and yet even more preferably 1 to 5 parts by mass of the component (B) with 100 parts by mass of the component (A). When the amount of the component (B) to be compounded is 1 part by mass or more per 100 parts by mass of the component (A), a thermosetting resin composition is obtained which enables a tow prepreg to be formed, the tow prepreg having a shelf life and a pot life that are long, having good workability, and additionally excelling in moldability. On the other hand, when the amount to be compounded is in the range of 20 parts by mass or less, a thermosetting resin composition is obtained which enables a tow prepreg to be formed, the tow prepreg having high barrier properties such as a hydrogen gas barrier property and additionally excelling in moldability.

(Epoxy resin curing agent (C))

Specific examples of the epoxy resin curing agent (C) used in the present invention (hereinafter, also referred to simply as a "component (C)") include polyphenol compounds, amine compounds, imidazole derivatives, dicyandiamide, and urea compounds. Among these, from the viewpoint of potential for favoring the pot life, the epoxy resin curing agent (C) is preferably at least one selected from the group consisting of imidazole, a tertiary amine, dicyandiamide, and dichlorophenyldimethylurea (DCMU), more preferably at least one selected from the group consisting of a tertiary amine, dicyandiamide, and dichlorophenyldimethylurea, and even more preferably dicyandiamide. As the tertiary amine, an epoxy adduct amine is preferred.

The compounding ratio of the adduct resin (X) and the epoxy resin curing agent (C) in the thermosetting resin composition may be within the standard compounding range that is ordinarily used for a case where an epoxy resin reaction product is produced through a reaction between an epoxy resin and an epoxy resin curing agent. Specifically, the component (C) to be compounded is in an amount of preferably 2 to 30 parts by mass, more preferably 2 to 25 parts by mass, even more preferably 3 to 20 parts by mass, yet even more preferably 3 to 15 parts by mass, yet even more preferably 3 to 12 parts by mass, and yet even more preferably 5 to 10 parts by mass per 100 parts by mass of the amine-epoxy resin (A) in forming the adduct resin (X). When the amount of the component (C) to be compounded per 100 parts by mass of the component (A) falls within the abovementioned ranges, a thermosetting resin composition is obtained with which a tow prepreg can be formed, the tow prepreg having high barrier properties such as a hydrogen gas barrier property, having a shelf life and a pot life that are long, having good workability, and additionally excelling in moldability.

From the viewpoint of obtaining the effects of the present invention, the total content of the adduct resin (X) and the epoxy resin curing agent (C) in the thermosetting resin composition is preferably 10 mass% or more, more preferably 20 mass% or more, even more preferably 30 mass% or more, and also 100 mass% or less.

(Solvent)

The thermosetting resin composition used in the present invention preferably further contains a solvent from the viewpoint of reducing the viscosity of the composition and increasing impregnation properties for the reinforcing fibers described below.

As the solvent, a non-reactive solvent is preferable, and specific examples thereof include alcohol-based solvents, such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol, 1-ethoxy-2-propanol, and 1-propoxy-2-propanol; ester-based solvents, such as ethyl acetate and butyl acetate; ketone-based solvents, such as acetone and methyl isobutyl ketone; ether-based solvents, such as diethyl ether and diisopropyl ether; and hydrocarbon-based solvents, such as toluene,

and of these, a single type may be used, or two or more types may be used.

From the viewpoint of the solubility of the adduct resin (X) and the epoxy resin curing agent (C) and the viewpoint of the ease of removing the solvent, the solvent is preferably at least one type selected from the group consisting of alcohol-based solvents, ester-based solvents, and hydrocarbon-based solvents, having 8 or less carbons, is more preferably at least one type selected from the group consisting of methanol, ethanol, 1-propanol, 2-propanol, 1-butanol, 2-butanol, ethyl acetate, and toluene, and is even more preferably at least one type selected from the group consisting of methanol and ethyl acetate.

When the thermosetting resin composition contains a solvent, the content of the solvent is not particularly limited, but from the viewpoint of increasing the impregnation properties of the thermosetting resin composition into the reinforcing fibers, the content of the solvent is, in the thermosetting resin composition, preferably 5 mass% or more, more preferably 10 mass% or more, even more preferably 15 mass% or more, yet even more preferably 20 mass% or more, yet even more preferably 30 mass% or more, and yet even more preferably 40 mass% or more, and from the viewpoint of ease of removing the solvent, the content of the solvent is preferably 90 mass% or less, more preferably 80 mass% or less, and even more preferably 70 mass% or less.

From a viewpoint such as improving the interfacial adhesiveness between the obtained cured product and the reinforcing fibers, the thermosetting resin composition may further contain an unsaturated fatty acid amide having from 14 to 24 carbons (hereafter, also simply referred to as an "unsaturated fatty acid amide"). The unsaturated fatty acid constituting the unsaturated fatty acid amide may be a fatty acid having from 14 to 24 carbons with at least one unsaturated bond. The number of unsaturated bonds in the unsaturated fatty acid is preferably from 1 to 6, more preferably from 1 to 4, and even more preferably from 1 to 2.

Examples of the unsaturated fatty acid amide include preferably at least one selected from the group consisting of palmitoleic acid amide, oleic acid amide, eicosenoic acid amide, and erucic acid amide. The content of an unsaturated fatty acid amide in the thermosetting resin composition is preferably from 0.1 to 20 parts by mass, and more preferably from 0.2 to 15 parts by mass, per 100 parts by mass of the total amount of the adduct resin (X) and the epoxy resin curing agent (C).

(Other additives)

The thermosetting resin composition may contain, as necessary and within a range that does not impair the effects of the present invention, additives such as a thermoplastic resin, a reactive diluent, a non-reactive diluent other than the above solvent, a curing accelerator, a wetting agent, a tackifier, an antifoaming agent, a rust-proofing agent, a lubricant, a pigment, an oxygen scavenger, a UV absorber, and an antioxidant.

When the thermosetting resin composition contains an additive described above, the total content of these additives in the composition is preferably 15.0 parts by mass or less, more preferably 10.0 parts by mass or less, and even more preferably 0.001 to 5.0 parts by mass, per 100 parts by mass of the total amount of the adduct resin (X) and the epoxy resin curing agent (C).

In terms of obtaining the effects of the present invention, the total content of the adduct resin (X) and the epoxy resin curing agent (C) in the solid content of the thermosetting resin composition is preferably 85 mass% or more, more preferably 90 mass% or more, and even more preferably 95 mass% or more, and the upper limit is 100 mass%. The "solid content of the thermosetting resin composition" means components excluding the water and solvent in the thermosetting resin composition.

The thermosetting resin composition can be prepared, for example, by blending a predetermined amount of each of the adduct resin (X), the epoxy resin curing agent (C), the solvent, and additives that are used as necessary, and then stirring and mixing using a well-known method and apparatus.

The thermosetting resin composition of the present invention has high workability. For example, the solid content viscosity of the thermosetting resin composition when heated at 100°C is preferably 1 Pa·s or less, more preferably 0.8 Pa·s or less, and even more preferably 0.5 Pa·s or less. The lower limit of the solid content viscosity is not particularly limited, but is usually 0.01 Pa·s or more. Note that the solid content viscosity of the thermosetting resin composition when heated at 100°C means a viscosity [Pa·s] determined at the point of 100°C by measuring the storage modulus G' and the loss modulus G" of components excluding the water and solvent in the thermoplastic resin composition (solid content) using a rheometer at a frequency of 1 Hz and a heating rate of 5°C/min while the temperature is raised from 60°C to 180°C.

The solid content viscosity of the thermosetting resin composition when heated at 100°C specifically can be measured by the method described in the examples.

The thermosetting resin composition of the present invention has a shelf life and a pot life that are long.

For example, the shelf life (-10°C) of the thermosetting resin composition is preferably 14 days or more, more preferably 20 days or more, and even more preferably 30 days or more.

In addition, the pot life (23°C) of the thermosetting resin composition is preferably 8 hours or more, more

preferably 12 hours or more, and even more preferably 24 hours or more.

The shelf life (-10°C) and the pot life (23°C) of the thermosetting resin composition can be measured by the methods described in the examples.

The cured product of the thermosetting resin composition of the present invention has high gas barrier properties. For example, the hydrogen gas permeability coefficient of the cured product is preferably 50 [cc·mm/(m$^2$·day·atm)] or less, more preferably 30 [cc·mm/(m$^2$·day·atm)] or less, and even more preferably 20 [cc·mm/(m$^2$·day·atm)] or less.

The hydrogen gas permeability coefficient of the cured product of the thermosetting resin composition can be measured by the method described in the examples under dry conditions at 23°C.

[Prepreg]

The prepreg of the present invention is one in which reinforcing fibers are impregnated with the abovementioned thermosetting resin composition.

<Reinforcing fibers>

Examples of the form of the reinforcing fibers used in the present invention include short fibers, long fibers, and continuous fibers. Among these, from the viewpoint of using the prepreg and the composite material as a material constituting a high-pressure gas container, long fibers or continuous fibers are preferable, and continuous fibers are more preferable.

Note that in the present specification, short fibers have a fiber length of from 0.1 mm to less than 10 mm, and long fibers have a fiber length of from 10 mm to 100 mm. In addition, continuous fibers also refer to a fiber bundle having a fiber length of more than 100 mm.

Examples of the shape of the continuous fibers include tow, sheet, and tape shapes, and the continuous fibers constituting a sheet or tape include, for example, unidirectional (UD) materials, textiles, and non-woven fabrics.

From the viewpoint of using the prepreg as, for example, a material constituting the outer layer of a high-pressure gas storage tank, the shape of the continuous fiber is preferably a tow or tape shape, and a tow shape is more preferable. From the viewpoint of easily obtaining a high strength and a high elastic modulus, the number of continuous fiber bundles (number of filaments) constituting the tow is preferably from 3K to 50K, and more preferably from 6K to 40K.

The average fiber length of the continuous fiber bundle of the reinforcing fibers is not particularly limited, but from the viewpoint of molding processability, the average fiber length is preferably from 1 to 10000 m, and more preferably from 100 to 10000 m.

From the viewpoint of molding processability and the viewpoint of easily obtaining a high strength and a high elastic modulus, the average fineness of the continuous fiber bundle is preferably from 50 to 2000 tex (g/1000 m), more preferably from 200 to 2000 tex, and even more preferably from 500 to 2000 tex.

Also, the average tensile modulus of the continuous fiber bundle is preferably from 50 to 1000 GPa.

Examples of materials of the reinforcing fibers include inorganic fibers, such as glass fibers, carbon fibers, basalt fibers, metal fibers, boron fibers, and ceramic fibers; and organic fibers, such as aramid fibers, polyoxymethylene fibers, aromatic polyamide fibers, polyparaphenylene benzobisoxazole fibers, and ultra-high molecular weight polyethylene fibers. Among these, inorganic fibers are preferable from the viewpoint of obtaining a high strength, and at least one type of inorganic fiber selected from the group consisting of glass fibers, carbon fibers and basalt fibers is more preferable because of the fibers being lightweight with high strength and a high elastic modulus, and carbon fibers are even more preferable.

Examples of carbon fibers include polyacrylonitrile-based carbon fibers and pitch-based carbon fibers. In addition, a carbon fiber made from a plant-derived raw material, such as lignin or cellulose, can also be used.

The reinforcing fibers used in the present invention may be treated with a treatment agent. Examples of the treatment agent include a surface treatment agent or a sizing agent.

Examples of the surface treatment agent include a silane coupling agent.

Examples of the silane coupling agent include a silane coupling agent having a vinyl group, a silane coupling agent having an amino group, a silane coupling agent having an epoxy group, a silane coupling agent having a (meth)acryl group, and a silane coupling agent having a mercapto group.

Examples of the sizing agent include urethane-based sizing agents, epoxy-based sizing agents, acrylic-based sizing agents, polyester-based sizing agents, vinyl ester-based sizing agents, polyolefin-based sizing agents, polyether-based sizing agents, and carboxylic acid-based sizing agents, and of these, a single sizing agent can be used, or two or more can be used in combination. Examples of combinations of two or more sizing agents include urethane/epoxy-based sizing agents, urethane/acrylic-based sizing agents, and urethane/carboxylic acid-based sizing agents.

From the viewpoints of improving the interfacial adhesiveness to the cured product of the thermosetting resin composition and further improving the strength and impact resistance of the obtained prepreg and composite material,

an amount of the treatment agent is preferably from 0.001 to 5 mass%, more preferably from 0.1 to 3 mass%, and even more preferably from 0.5 to 2 mass%, relative to the amount of the reinforcing fibers.

Commercially available products can be also used as the reinforcing fibers. Examples of commercially available products of carbon fibers that are continuous fibers include Torayca (trade name) yarns of the series "T300", "T300B", "T400HB", "T700SC", "T800SC", "T800HB", "T830HB", "T1000GB", "T100GC", "M35JB", "M40JB", "M46JB", "M50JB", "M55J", "M55JB", "M60JB", "M30SC", and "Z600", and Torayca (trade name) fabrics of the series "CO6142", "CO6151B", "CO6343", "CO6343B", "CO6347B", "CO6644B", "CK6244C", "CK6273C", and "CK6261C", the "UT70" series, the "UM46" series, and the "BT70" series, available from Toray Industries, Inc.

<Content>

The content of the reinforcing fibers in the prepreg of the present invention is not particularly limited, but from the viewpoint of obtaining a high strength and a high elastic modulus, the volume fraction of reinforcing fibers in the prepreg is preferably in a range of 0.10 or more, more preferably 0.20 or more, even more preferably 0.30 or more, and yet even more preferably 0.40 or more. In addition, from the viewpoints of gas barrier properties, impact resistance, and molding processability, the content of the reinforcing fibers is preferably in a range of 0.98 or less, more preferably 0.95 or less, even more preferably 0.80 or less, and yet even more preferably 0.70 or less.

A volume fraction Vf of the reinforcing fibers in the prepreg can be calculated from the following equation.

$$Vf = \{(\text{mass (g) of reinforcing fibers})/(\text{specific gravity of reinforcing fibers})\} \div [\{(\text{mass (g) of reinforcing fibers})/(\text{specific gravity of reinforcing fibers})\} + \{(\text{mass (g) of solid content of infiltrated thermosetting resin composition})/(\text{specific gravity of solid content of thermosetting resin composition})\}]$$

In addition, from the viewpoint of obtaining the effects of the present invention, the total content of the solid content of the thermosetting resin composition and the reinforcing fibers constituting the prepreg of the present invention is preferably 70 mass% or more, more preferably 80 mass% or more, and even more preferably 90 mass% or more, and the upper limit is 100 mass%.

The shape of the prepreg of the present invention can be selected, as appropriate, according to the form of the reinforcing fibers to be used and the application, and examples thereof include tow, sheet, and tape shapes. Examples of the type of prepreg constituting the sheet or tape include unidirectional (UD) materials, textiles, and non-woven fabrics.

For example, when the prepreg of the present invention is used as a material constituting an outer layer of a high-pressure gas storage tank, from the viewpoint of forming the outer layer according to a method described below, the prepreg is preferably shaped as a tow prepreg or a tape-like prepreg, and more preferably a tow prepreg.

[Method for producing prepreg]

The method for producing the prepreg of the present invention is not particularly limited, and the prepreg can be produced according to a typical method. For example, the prepreg can be obtained by impregnating reinforcing fibers with the thermosetting resin composition comprising the adduct resin (X) that is a reaction product of an amine-epoxy resin (A) and a predetermined epoxy modifier (B), an epoxy resin curing agent (C), and a solvent, and then subjecting the resulting material to a drying step to remove the solvent.

The method of impregnating the reinforcing fibers with the thermosetting resin composition is not particularly limited, and the impregnation can be implemented using a known methods as appropriate, according to the form of reinforcing fibers or the like. For example, in a case where a tow prepreg is to be produced, a method of immersing, in a resin bath filled with the abovementioned thermosetting resin composition, a continuous fiber bundle unwound from a roll, and impregnating the continuous fiber bundle with the composition, and then pulling the impregnated continuous fiber bundle from the resin bath can be used. Subsequently, a step of removing the excess thermosetting resin composition using squeeze rollers or the like may be implemented.

Impregnation with the thermosetting resin composition can also be implemented under pressurized conditions or reduced pressure conditions, as necessary.

Then, the reinforcing fibers impregnated with the thermosetting resin composition are subjected to a drying step to remove the solvent. The drying conditions in the drying step are not particularly limited, but preferred are conditions under which the solvent can be removed and curing of the thermosetting resin composition does not excessively progress. From this viewpoint, for example, the drying temperature can be selected within the range of 30 to 120°C and the drying

time can be selected within the range of 10 seconds to 5 minutes.

The prepreg obtained through the drying step may be wound, etc. and used as a prepreg product, or may be continuously supplied for the production of a composite material after the implementation of the drying step, without being subjected to winding or the like.

[Fiber reinforced composite material]

The fiber reinforced composite material of the present invention is a cured product of the above prepreg, and contains a cured product of the above thermosetting resin composition, which is a matrix resin, and reinforcing fibers. The thermosetting resin composition and reinforcement fibers, and preferable aspects of these are the same as those described in regard to the prepreg.

The composite material is produced by pre-molding the prepreg of the present invention to a desired shape, and then curing the prepreg. For example, when the composite material of the present invention is to be used for a pipe, a shaft, a cylinder, a tank, or the like, a composite material of a desired shape can be produced by wrapping the above-described tow prepreg around the outer surface of a mandrel or liner, and then curing the tow prepreg.

In the production of the composite material, the method of curing the prepreg is not particularly limited, and the prepreg may be cured by a known method at a temperature and time sufficient for curing the thermosetting resin composition contained in the prepreg. The curing conditions of the prepreg depend on details such as the thickness of the prepreg and the composite material to be formed, but for example, the curing temperature can be selected in a range from 10 to 140°C, and the curing time can be selected in a range from 5 minutes to 200 hours, and from the viewpoint of productivity, the curing temperature is preferably in a range from 80 to 140°C, and the curing time is preferably in a range from 10 minutes to 5 hours.

The composite material of the present invention is suitably used, for example, in a pipe, shaft, cylinder, tank, or the like, and because the composite material of the present invention excels in impact resistance and gas barrier properties such as a hydrogen gas barrier property, the composite material is suitable as a material for forming a high-pressure gas container and particularly suitable as a material for forming a high-pressure gas storage tank described below.

[High-pressure gas container]

A high-pressure gas container of the present invention is obtained using the above fiber reinforced composite material. Use of the above composite material for the high-pressure gas container of the present invention yields excellent gas barrier properties such as a hydrogen gas barrier property.

The high-pressure gas container of the present invention may be constituted of only the above composite material, or a portion of the container may be constituted of the composite material.

Specific examples of the high-pressure gas container of the present invention include high-pressure gas storage tanks. From the viewpoints of gas barrier properties such as a hydrogen gas barrier property, pressure resistance, impact resistance, and productivity, the high-pressure gas storage tank preferably includes a liner and an outer layer containing the above fiber reinforced composite material.

A high-pressure gas storage tank including a liner and an outer layer containing the fiber reinforced composite material is described below with reference to the drawings.

FIG. 1 is a cross-sectional schematic view illustrating an embodiment of a high-pressure gas storage tank that is the high-pressure gas container of the present invention, and a high-pressure gas storage tank 10 includes a liner 1 and an outer layer 2. The liner 1 is a pressure-resistant member provided with a space to be filled with a gas therein, and is usually formed in a hollow shape. The outer layer 2 includes the fiber reinforced composite material of the present invention, and is formed to cover the outer surface of the liner 1.

A mouthpiece 3 has, for example, a substantially cylindrical shape, and is fitted and fixed between the liner 1 and the outer layer 2. A substantially cylindrically-shaped opening of the mouthpiece 3 functions as an opening of the high-pressure gas storage tank 10. The mouthpiece 3 may be formed from another metal such as stainless steel or aluminum, or may be made of resin.

A boss 4 is, for example, made from aluminum, is assembled with a portion thereof being exposed externally, and serves to guide heat generation and heat absorption within the tank to the outside.

A valve 5 has, for example, a shape in which male threads are formed in a cylindrical portion, and is screwed together with female threads formed in an inner surface of the mouthpiece 3, and thereby the opening of the mouthpiece 3 is closed by the valve 5. Note that in the high-pressure gas storage tank of the present invention, the mouthpiece 3, the boss 4, and the valve 5 can be replaced by other means.

<Liner>

Examples of the material of the liner 1 constituting the high-pressure gas storage tank 10 include a liner containing a resin as a main component (hereinafter, "resin liner"), and a liner containing a metal as a main component (hereinafter "metal liner"). A resin liner is preferably used in a vehicle-mounted tank or the like in which a weight reduction is required.

The resin used in the resin liner is not particularly limited as long as it is a resin that excels in pressure resistance and gas barrier properties such as a hydrogen gas barrier property, and examples of the resin include a thermoplastic resin, a cured product of a thermosetting resin, and a cured product of a photocurable resin. Among these, a thermoplastic resin is preferable from the viewpoint of being able to easily mold the liner.

Examples of the thermoplastic resin include a polyamide resin, a polyester resin, a polyolefin resin, a polyimide resin, a polycarbonate resin, a polyether imide resin, a polyamide imide resin, a polyphenylene ether imide resin, a polyphenylene sulfide resin, a polysulfone resin, a polyether sulfone resin, a polyarylate resin, a liquid crystal polymer, a polyether ether ketone resin, a polyether ketone resin, a polyether ketone ketone resin, a polyether ether ketone ketone resin, and a polybenzimidazole resin, and of these, a single type may be used, or two or more types may be combined and used.

From the viewpoints of pressure resistance and gas barrier properties such as a hydrogen gas barrier property, among these thermoplastic resins, the thermoplastic resin is preferably at least one selected from the group consisting of polyamide resins and polyolefin resins, and is more preferably a polyamide resin.

From the viewpoints of pressure resistance and gas barrier properties such as a hydrogen gas barrier property, the polyamide resin is preferably a polyamide resin that contains a diamine-derived constituent unit and a dicarboxylic acid-derived constituent unit, with 50 mol% or more of the above diamine-derived constituent units being derived from xylene diamine. Specific examples include the polyamide resins described in WO 2016/084475.

Examples of polyolefin resins include polyethylene resins such as low-density polyethylene, medium-density polyethylene, high-density polyethylene, and linear low density polyethylene.

The resin liner may contain reinforcing fibers from the viewpoint of obtaining a high strength and a high elastic modulus. As the reinforcing fibers, the same reinforcing fibers as those exemplified with regard to the above prepreg can be used, and carbon fibers are preferable from the viewpoint of obtaining a lightweight property, a high strength, and a high elastic modulus.

When the resin liner contains reinforcing fibers, from the perspective of obtaining a high strength and a high elastic modulus, the content of the reinforcing fibers is such that the volume fraction of the reinforcing fibers in the resin liner is in a range of preferably 0.10 or more, more preferably 0.20 or more, even more preferably 0.30 or more, and even more preferably 0.40 or more. In addition, from the viewpoints of gas barrier properties, and molding processability, the content of the reinforcing fibers is preferably in a range of 0.98 or less, more preferably 0.95 or less, even more preferably 0.80 or less, and yet even more preferably 0.70 or less.

In addition, from the viewpoint of increasing impact resistance, the resin liner can also contain an elastomer component. Examples of the elastomer component include polyolefin-based elastomers, diene-based elastomers, polystyrene-based elastomers, polyamide-based elastomers, polyester-based elastomers, polyurethane-based elastomers, fluorine-based elastomers, and silicon-based elastomers, other than the abovementioned thermoplastic resin. The elastomer component may also be a modified elastomer obtained by modifying these elastomers by an $\alpha,\beta$-unsaturated carboxylic acid or acid anhydride thereof, an acrylamide or derivatives thereof, or the like in the presence or absence of a radical initiator. A single type of elastomer component may be used alone or two or more types may be combined and used.

When the resin liner contains an elastomer component, from the viewpoint of enhancing the impact resistance while maintaining gas barrier properties, the content of the elastomer component in the resin liner is in a range of preferably from 5 to 20 mass% and more preferably from 10 to 15 mass%.

Examples of the metal used in the metal liner include light alloys, such as an aluminum alloy or a magnesium alloy.

The thickness of the liner can be appropriately selected according to the capacity, shape, and the like of the high-pressure gas storage tank, but from the viewpoint of pressure resistance and gas barrier properties such as a hydrogen gas barrier property, the thickness of the liner is preferably 100 $\mu$m or more, more preferably 200 $\mu$m or more, and even more preferably 400 $\mu$m or more, and from the viewpoint of reducing the size and weight of the high-pressure gas storage tank, the thickness of the liner is preferably 60 mm or less, and more preferably 40 mm or less.

<Outer layer>

The outer layer 2 constituting the high-pressure gas storage tank 10 is not particularly limited as long as the outer layer 2 includes the above fiber reinforced composite material.

From the viewpoints of impact resistance and gas barrier properties such as a hydrogen gas barrier property,

the content of the fiber reinforced composite material in the material constituting the outer layer is preferably 50 mass% or more, more preferably 70 mass% or more, even more preferably 80 mass% or more, and yet even more preferably 90 mass% or more, and the upper limit is 100 mass%. From the viewpoints of impact resistance, gas barrier properties such as a hydrogen gas barrier property, and moldability, the outer layer is preferably constituted from only the fiber reinforced composite material of the present invention.

In the outer layer, the reinforcing fibers in the fiber reinforced composite material are preferably arranged in a regular manner. Being regularly arranged means that 50 mass% or more, and preferably 70 mass% or more of the reinforcing fibers contained in the outer layer are aligned with constant directionality. Examples of constant directionality include in a spiral shape, in a longitudinal direction, in a lateral direction, or a combination thereof.

Note that in the present specification, the spiral shape, the longitudinal direction, and the lateral direction are intended to include, in addition to a strict arrangement in a spiral-shape or the like, a degree of error generally interpreted by a person skilled in the art.

The thickness of the outer layer can be appropriately selected according to the capacity, shape, and the like of the high-pressure gas storage tank, but from the viewpoint of imparting impact resistance and high gas barrier properties, the thickness of the outer layer is preferably 100 $\mu$m or more, more preferably 200 $\mu$m or more, and even more preferably 400 $\mu$m or more, and from the viewpoint of reducing the size and weight of the high-pressure gas storage tank, the thickness of the outer layer is preferably 80 mm or less, and more preferably 60 mm or less.

Examples of aspects of the outer layer 2 include, as illustrated in FIG. 1, an aspect in which the outer layer 2 is formed so as to cover an outer surface of a body portion of the liner 1 with the above fiber reinforced composite material without any gaps.

The outer layer may be provided directly on the outer surface of the liner. Alternatively, one or more other layers may be provided on the outer surface of the liner, and the outer layer 2 may be provided on the surface of the other layers. For example, to improve adhesiveness between the liner and the outer layer, an adhesive layer may be provided between the liner and the outer layer.

In addition, any optional layer such as a protective layer, a paint layer, or a rust-preventing layer may be formed on the surface of the outer layer.

The gas to be stored in the high-pressure gas container of the present invention may be any material that is a gas at 25°C and 1 atm, and examples thereof include hydrogen, oxygen, carbon dioxide, nitrogen, argon, LPG, alternative chlorofluorohydrocarbons, and methane. Among these, the gas is preferably hydrogen from the viewpoint of efficacy of the present invention.

<Method for producing high-pressure gas container>

The method for producing the high-pressure gas container of the present invention is not particularly limited. For example, if a high-pressure gas container constituted of only the above fiber reinforced composite material is to be produced, the high-pressure gas container may be produced, for example, by a method in which a prepreg containing continuous fibers such as a tow prepreg is wrapped around an outer surface of a mold such as a balloon or ceramic and heated and cured, after which the mold is removed, or by a method in which molding is implemented by a 3D printer using the above prepreg.

A method for producing a high-pressure gas storage tank comprising a liner and an outer layer comprising a fiber-reinforced composite material preferably comprises, in order, steps (I) to (III) described below, from the viewpoint of productivity.

Step (I): Impregnating continuous fiber bundles with the thermosetting resin composition, wherein the thermosetting resin composition comprises an adduct resin (X) that is a reaction product of an amine-epoxy resin (A) and an epoxy modifier (B) described below, an epoxy resin curing agent (C), and a solvent, and wherein the adduct resin (X) is a reaction product obtained by reacting 1 to 20 parts by mass of the epoxy modifier (B) with 100 parts by mass of the amine-epoxy resin (A).

Epoxy modifier (B): at least one selected from the group consisting of meta-xylylenediamine, para-xylylenediamine, 4,4'-diaminodiphenylmethane, and 4,4'-diaminodiphenylsulfone.

Step (II): Drying the continuous fiber bundles impregnated with the thermosetting resin composition to remove the solvent and obtain a tow prepreg.

Step (III): Wrapping the tow prepreg around an outer surface of the liner and then heating to form the outer layer formed from the fiber-reinforced composite material.

(Step (I))

In step (I), continuous fiber bundles are impregnated with the thermosetting resin composition, the thermosetting

resin composition comprising an adduct resin (X) that is a reaction product of an amine-epoxy resin (A) and an epoxy modifier (B), an epoxy resin curing agent (C), and a solvent. Through this, an undried tow prepreg is obtained.

The thermosetting resin composition and suitable aspects thereof are the same as those described above. In addition, the reinforcing fibers constituting the continuous fiber bundle and the preferred aspects thereof are also the same as those described above, and at least one selected from the group consisting of glass fibers, carbon fibers, and basalt fibers is preferred, and carbon fibers are more preferable.

The method of impregnating the continuous fiber bundles with the thermosetting resin composition is not particularly limited, and a known method can be used. For example, a method of immersing, in a resin bath filled with the abovementioned thermosetting resin composition, a continuous fiber bundle unwound from a roll, and impregnating the continuous fiber bundle with the composition, and then pulling the impregnated continuous fiber bundle from the resin bath can be used. Subsequently, a step of removing the excess thermosetting resin composition using squeeze rollers or the like may be implemented.

(Step (II))

In step (II), the continuous fiber bundles impregnated with the thermosetting resin composition are dried to remove the solvent and obtain a tow prepreg.

The drying conditions are not particularly limited, but preferred are conditions under which the solvent can be removed and curing of the thermosetting resin composition does not excessively progress. From this viewpoint, for example, the drying temperature can be selected within the range of 30 to 120°C and the drying time can be selected within the range of 10 seconds to 5 minutes.

The drying can be carried out by a known method using a hot air dryer, a heater, a heating roll, a hot plate, or the like. Examples thereof include a method of passing continuous fiber bundles impregnated with the thermosetting resin composition through a heating atmosphere using a hot air dryer, a heater, or the like, and a method of contacting the continuous fiber bundles with a heating body such as a heating roll or a hot plate. Among these, a method of using a hot air dryer is preferable.

The tow prepreg obtained in the step (II) may be wound, for example, or may be continuously supplied to step (III) without being subjected to winding or the like.

(Step (III))

In step (III), the above tow prepreg obtained in step (II) is wrapped around an outer surface of the liner and then heated to form the outer layer formed from the fiber reinforced composite material. Through this, a high-pressure gas storage tank including a liner and an outer layer made of the fiber reinforced composite material can be produced. Note that in order to improve adherence between the liner and the outer layer, a step of providing one or more other layers in advance on the outer surface of the liner may be implemented.

The method for wrapping the tow prepreg around the outer surface of the liner is not particularly limited. For example, a known filament winding method can be used to wrap the tow prepreg in a spiral shape without any gaps so as to cover the outer surface of the liner. When the tow prepreg is to be applied to the outer surface of the liner, an adhesive or the like may be used as necessary.

Heating is implemented by a known method at a temperature and time sufficient for curing the thermosetting resin composition contained in the tow prepreg. From the viewpoint of improving productivity, the heating temperature is preferably in a range from 80 to 140°C, and the heating time is preferably in a range from 10 minutes to 5 hours.

After the outer layer is formed as described above, another optional layer such as a protective layer, a paint layer, or a rust-preventing layer can be formed on the surface of the outer layer.

## Examples

Next, the present invention will be described specifically with reference to examples. However, the present invention is not limited in any way by these examples.

Measurements and evaluations in the present examples were performed by the following methods.

<Hydrogen gas permeability coefficient>

The thermosetting resin composition was heated at 100°C, poured into a mold (100 mm × 100 mm × 2 mm) coated with a mold release agent ("DAIFREE", available from DAIKIN INDUSTRIES, LTD.), and cured to obtain a plate-like test piece (thickness of 2 mm). The hydrogen gas permeability coefficient [cc·mm/($m^2$·day·atm)] of this test piece was measured in a dried state at 23°C using a water vapor permeability measuring device ("G2700 T·F", available from

GTR Tec Corporation).

<Pot life (23°C)>

Ten grams of the thermosetting resin composition was placed in a plastic cup (diameter of 60 mm), the flowability of the thermosetting resin composition was checked in a state of 23°C and a humidity of 50%, and the time [h] taken for the thermosetting resin composition to stop flowing was measured.

Here "stop flowing" refers to complete immobility of the thermosetting resin composition even if an attempt is made to mix the thermosetting resin composition in the plastic cup with a wood spatula, meaning specifically a state in which a wood spatula does not stick into the thermosetting resin composition (the same applies to the following).

<Shelf life (-10°C)>

Ten grams of a thermosetting resin composition was placed in a plastic cup (diameter of 60 mm), kept at -10°C, and allowed to return to room temperature (23°C) every other day, at which the flowability of the thermosetting resin composition in the state of 23°C and a humidity of 50% was checked. The number of days [days] until the thermosetting resin composition stopped flowing was determined.

<Solid content viscosity (100°C)>

The solid content viscosity of the thermosetting resin composition was measured by the following method using a rheometer "ARES-G2", available from TA Instruments.

A composition for solid content viscosity measurement was prepared by a method similar to that in Production of thermosetting resin composition described below, except that no solvent was used. The space between aluminum plates at 60°C was filled with the composition, and the solid content viscosity [Pa·s] at the point of 100°C was determined by measuring the storage modulus G' and the loss modulus G" at a frequency of 1 Hz and a distance between plates of 0.5 mm while the temperature was raised from 60°C to 180°C at a heating rate of 5°C/min.

<Moldability>

A tow prepreg was produced under the following conditions, and a CFRP pipe using this tow prepreg under the following conditions, and then the moldability of the thermosetting resin composition was evaluated in accordance with the following evaluation criteria.

(Production of tow prepreg)

A 24 K CF tow (TORAYCA yarn "T700SC-24000", available from Toray Industries, Inc., number of filaments: 24 K, tensile modulus: 230 GPa, fiber fineness: 1650 tex) was impregnated with the thermosetting resin composition to produce an undried tow prepreg. Next, the undried tow prepreg was heated and dried for 60 seconds in a hot air dryer at 120°C to produce a tow prepreg. The content of the continuous carbon fibers in the tow prepreg was 0.55 in terms of the volume fraction.

<Production of CFRP pipe>

A length of 300 mm of the tow prepreg produced above was wound onto an aluminum bar of 30 mm in diameter while being traversed at 5 mm per round to provide a first layer. Additional three such layers were wound thereon to form a body having four layers in total thereon. This body was heated and cured while maintained in a hot air dryer at 140°C for two hours to obtain a pipe-shaped fiber-reinforced resin (CFRP pipe).

(Evaluation criteria)

A: The tow prepreg can be wound onto the aluminum bar, and a CFRP pipe can be molded by resin curing.
B: The tow prepreg can be wound onto the aluminum bar, but the viscosity of the thermosetting resin composition is so low that the thermosetting resin composition flows out of the tow prepreg and a CFRP pipe cannot be formed.
C: The viscosity of the thermosetting resin composition is so high that the CF tow cannot be impregnated with the thermosetting resin composition. Alternatively, even though the CF tow can be impregnated with the thermosetting

resin composition, the tow prepreg is too hard to be wound onto the aluminum bar.

Example 1 (Production and evaluation of thermosetting resin composition)

100 g of an epoxy resin having a glycidylamino group derived from meta-xylylenediamine (amine-epoxy resin 1; "TETRAD-X", available from Mitsubishi Gas Chemical Co., Inc.) as an amine-epoxy resin (A) and 2 g of 4,4'-diaminodiphenylmethane (4,4'-DDM, available from Tokyo Chemical Industry Co., Ltd.) as an epoxy modifier (B) were fed in a flask and heated at 140°C for 2.5 hours with stirring using a mechanical stirrer under a nitrogen atmosphere to obtain an adduct resin (X).

Subsequently, 10 g of the adduct resin (X) obtained was taken out into a polypropylene container, 18.6 g of a mixed solution of methanol and ethyl acetate (mass ratio of methanol:ethyl acetate 1:4) as a solvent and 0.5 g of dicyandiamide ("DICY7", available from Mitsubishi Chemical Corporation) as an epoxy resin curing agent (C) were added thereto under room temperature (23°C), and stirring was manually conducted with a wood spatula to obtain a homogeneous thermosetting resin composition. Various evaluations were conducted by the abovementioned methods using this thermosetting resin composition. The results are shown in Table 1.

Examples 2 to 11

Each thermosetting resin composition was produced by a method similar to that of Example 1 with the exception that, in Example 1, the type and amount to be fed of the epoxy modifier (B) and the type and amount to be compounded of the epoxy resin curing agent (C) were changed as shown in Table 1, and the various evaluations were implemented by the abovementioned methods. The results are shown in Table 1.

Comparative Examples 1 to 5

Each thermosetting resin composition was produced by a method similar to that of Example 1 with the exception that, in Example 1, the type and amount to be fed of the epoxy modifier (B) and the type and amount to be compounded of the epoxy resin curing agent (C) were changed as shown in Table 2, and the various evaluations were implemented by the abovementioned methods. The results are shown in Table 2.

Comparative Example 6

A thermosetting resin composition was produced by a method similar to that of Example 1 with the exception that, in Example 1, no adduct resin (X) was produced and dicyandiamide as the epoxy resin curing agent (C), in an amount shown Table 2, was added to the amine-epoxy resin (A), and the various evaluations were implemented by the abovementioned methods. The results are shown in Table 2.

Comparative Example 7

A thermosetting resin composition was produced by a method similar to that of Example 1 with the exception that, in Example 1, no adduct resin (X) was produced and 10 g of isophoronediamine (IPDA, available from Tokyo Chemical Industry Co., Ltd.) as the epoxy resin curing agent (C) was added to 100 g of the amine-epoxy resin (A), and the various evaluations were implemented by the abovementioned methods. The results are shown in Table 2.

Comparative Example 8

A thermosetting resin composition was produced by a method similar to that of Example 1 with the exception that a bisphenol A-type epoxy resin ("jER828", available from Mitsubishi Chemical Corporation) was used as a comparative epoxy resin instead of the amine-epoxy resin (A) and the amount of the epoxy modifier (B) to be fed was changed as shown in Table 2, and the various evaluations were implemented by the abovementioned methods. The results are shown in Table 2.

Note that the amounts to be compounded of the components other than the solvent are shown in Table 1 and Table 2.

Table 1

| | | | Example | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Compounding (parts by mass) | (A) Amine-epoxy resin 1 (TETRAD-X) *1 | | 100 | 100 | 100 | 100 | 100 | 100 | 100 | 100 | 100 | 100 | 100 |
| | (B) Epoxy modifier | DDM *2 | 2 | 4 | 12 | 4 | | | | | | 4 | 4 |
| | | MXDA *3 | | | | | 2 | | | | | | |
| | | PXDA *4 | | | | | | 2 | | | | | |
| | | DDS *5 | | | | | | | 2 | 12 | 4 | | |
| | (C) Epoxy resin curing agent | Dicyandiamide *6 | 5 | 5 | 5 | 5 | 5 | 5 | 5 | 5 | 5 | | |
| | | DCMU *7 | | | | 5 | | | | | 5 | | |
| | | Imidazole *8 | | | | | | | | | | 25 | |
| | | Tertiary amine A *9 | | | | | | | | | | | 20 |
| Evaluation results | Hydrogen gas permeability coefficient | cc·mm/m$^2$·day·atm | 11 | 12 | 20 | 13 | 9 | 10 | 18 | 25 | 18 | 45 | 44 |
| | Pot life (23°C) | h | >24 | >24 | >24 | >24 | 12 | 12 | >24 | >24 | >24 | >24 | >24 |
| | Shelf life (-10°C) | day | >30 | >30 | >30 | >30 | 20 | 20 | >30 | >30 | >30 | >30 | >30 |
| | Solid content viscosity (100°C) | Pa·s | 0.04 | 0.1 | 0.8 | 0.1 | 0.2 | 0.5 | 0.1 | 1 | 0.4 | 1 | 1 |
| | Moldability | | A | A | A | A | A | A | A | A | A | A | A |

Table 2

| | | | Comparative Example | | | | | | | |
|---|---|---|---|---|---|---|---|---|---|---|
| | | | 1 | 2 | 3 | 4 | 5 | 6 | 7 | 8 |
| Compounding (parts by mass) | (A) Amine-epoxy resin 1 (TETRAD-X) *1 | | 100 | 100 | 100 | 100 | 100 | 100 | 100 | |
| | (a) Comparative epoxy resin 1 (jER828) *10 | | | | | | | | | 100 |
| | (B) Epoxy modifier | DDM *2 | 25 | | | | 0.5 | | | 4 |
| | | MXDA *3 | | 25 | | | | | | |
| | | PXDA *4 | | | 25 | | | | | |
| | | DDS *5 | | | | 25 | | | | |
| | (C) Epoxy resin curing agent | Dicyandiamide *6 | 5 | 5 | | | 5 | 5 | | 5 |
| | | DCMU *7 | | | | | | | | |
| | | Imidazole *8 | | | | | | | | |
| | | Tertiary amine A *9 | | | | | | | | |
| | | IPDA *11 | | | | | | | 10 | |
| Evaluation results | Hydrogen gas permeability coefficient | cc·mm/m$^2$·day·atm | 55 | Test piece not producible | Test piece not producible | 60 | 11 | 10 | 15 | 65 |
| | Pot life (23°C) | h | Unmeasurable | Unmeasurable | Unmeasurable | Unmeasurable | >24 | >24 | 2 | >24 |
| | Shelf life (-10°C) | day | Unmeasurable | Unmeasurable | Unmeasurable | Unmeasurable | >30 | >30 | 1 | >30 |
| | Solid content viscosity (100°C) | Pa·s | Unmeasurable | Unmeasurable | Unmeasurable | Unmeasurable | 0.01 | 0.01 | Unmeasurable | 0.8 |
| | Moldability | | C | C | C | C | B | B | C | A |

The details of the components used in Tables 1 and 2 are shown below.

*1: "TETRAD-X", available from Mitsubishi Gas Chemical Co., Inc. (an epoxy resin having a glycidylamino group derived from meta-xylylenediamine)
*2: 4,4'-Diaminodiphenylmethane (4,4'-DDM), available from Tokyo Chemical Industry Co., Ltd.
*3: meta-Xylylenediamine (MXDA), available from Tokyo Chemical Industry Co., Ltd.
*4: para-Xylylenediamine (PXDA), available from Tokyo Chemical Industry Co., Ltd.
*5: 4,4'-Diaminodiphenylsulfone (4,4'-DDS), available from Tokyo Chemical Industry Co., Ltd.
*6: "DICY7" (dicyandiamide), available from Mitsubishi Chemical Corporation
*7: Dichlorophenyldimethylurea (DCMU), available from Tokyo Chemical Industry Co., Ltd.
*8: "PN23" (imidazole), available from Ajinomoto Fine-Techno Co., Inc.
*9: "MY24" (amine adduct-based curing agent), available from Ajinomoto Fine-Techno Co., Inc.
*10: "jER828" (bisphenol A-type epoxy resin), available from Mitsubishi Chemical Corporation
*11: Isophoronediamine (IPDA), available from Tokyo Chemical Industry Co., Ltd.

From Tables 1 and 2, it is clear that the cured products of the thermosetting resin compositions of the present invention had low hydrogen gas permeability coefficients, that is, good hydrogen gas barrier properties. It is also clear that the thermosetting resin compositions of the present invention enabled tow prepregs to be formed, the tow prepregs having a shelf life and a pot life that are long and additionally excelling in moldability in winding and molding a fiber-reinforced composite material.

Industrial Applicability

According to the present invention, a thermosetting resin composition with which a tow prepreg can be formed can be provided, the tow prepreg having high barrier properties such as a hydrogen gas barrier property, having a shelf life and a pot life that are long, having good workability, and additionally excelling in moldability, The fiber-reinforced composite material in which the thermosetting resin composition of the present invention is used has high gas barrier properties, and for example, is suitable as a material constituting a high-pressure gas container such as a high-pressure gas storage tank.

Reference Signs List

10 High-pressure gas storage tank
1 Liner
2 Outer Layer
3 Mouthpiece
4 Boss
5 Valve

## Claims

1. A thermosetting resin composition comprising an adduct resin (X) that is a reaction product of an amine-epoxy resin (A) and an epoxy modifier (B) described below, and an epoxy resin curing agent (C),
wherein the adduct resin (X) is a reaction product obtained by reacting 1 to 20 parts by mass of the epoxy modifier (B) with 100 parts by mass of the amine-epoxy resin (A):
Epoxy modifier (B): at least one selected from the group consisting of meta-xylylenediamine, para-xylylenediamine, 4,4'-diaminodiphenylmethane, and 4,4'-diaminodiphenylsulfone.

2. The thermosetting resin composition according to claim 1, wherein the amine-epoxy resin (A) has a skeleton represented by General Formula (1) below:

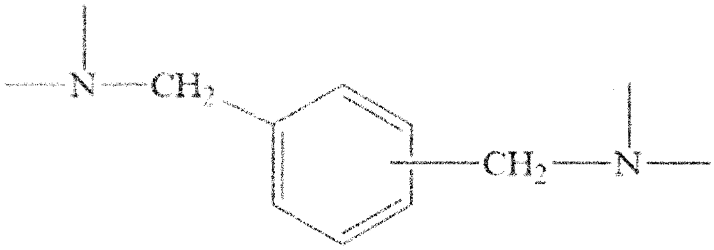

(1)

3. The thermosetting resin composition according to claim 1 or 2, wherein the epoxy resin curing agent (C) is at least one selected from the group consisting of imidazole, a tertiary amine, dicyandiamide, and dichlorophenyldimethylurea.

4. The thermosetting resin composition according to any one of claims 1 to 3, wherein a solid content viscosity of the thermosetting resin composition when heated at 100°C is 1 Pa·s or less.

5. A prepreg in which reinforcing fibers are impregnated with the thermosetting resin composition according to any one of claims 1 to 4.

6. The prepreg according to claim 5, wherein the reinforcing fibers are at least one selected from the group consisting of glass fibers, carbon fibers, and basalt fibers.

7. The prepreg according to claim 5 or 6, wherein the prepreg is a tow prepreg.

8. A fiber-reinforced composite material that is a cured product of the prepreg according to any one of claims 5 to 7.

9. A high-pressure gas container in which the fiber-reinforced composite material according to claim 8 is used.

[Fig. 1]

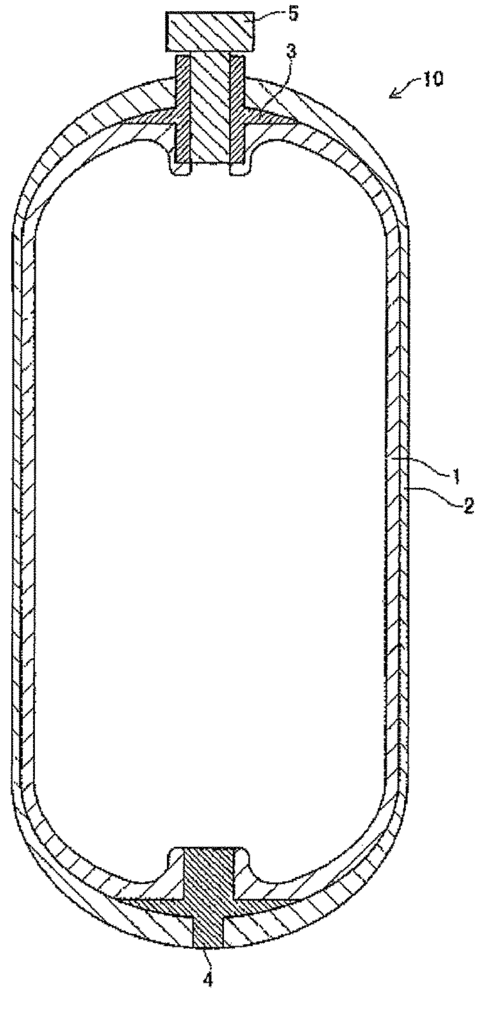

**INTERNATIONAL SEARCH REPORT**

International application No.
**PCT/JP2022/007767**

**A. CLASSIFICATION OF SUBJECT MATTER**

***C08G 59/56***(2006.01)i; ***C08J 5/24***(2006.01)i
FI: C08G59/56; C08J5/24 CFC

According to International Patent Classification (IPC) or to both national classification and IPC

**B. FIELDS SEARCHED**

Minimum documentation searched (classification system followed by classification symbols)

B29B11/16; 15/08-15/14; C08G59/00-59/72; C08J5/04-5/10; 5/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 60-6722 A (TORAY KK) 14 January 1985 (1985-01-14) claims, p. 2, upper left column, lines 15-19, p. 2, lower left column, lines 2-6, p. 2, lower left column, lines 13-19, p. 2, lower right column, lines 8-13, p. 4, table in the bottom column, example 5 | 1, 3-8 |
| Y | | 9 |
| X | JP 62-252417 A (TORAY KK) 04 November 1987 (1987-11-04) claims, p. 3, lower right column, lines 3-9, p. 4, lower right column, line 14 to p. 5, upper left column, line 3, p. 5, upper left column, lines 7-17, example 1 | 1, 4-8 |
| Y | | 9 |
| X | JP 62-246924 A (TORAY KK) 28 October 1987 (1987-10-28) claims, p. 2, lower right column, line 20 to p. 3, upper left column, line 6, p. 3, lower right column, lines 8-17, example 1 | 1, 4-8 |
| Y | | 9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 May 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**

International application No.
**PCT/JP2022/007767**

**C. DOCUMENTS CONSIDERED TO BE RELEVANT**

| Category* | Citation of document, with indication, where appropriate, of the relevant passages | Relevant to claim No. |
|---|---|---|
| X | JP 54-144499 A (MITSUBISHI RAYON CO) 10 November 1979 (1979-11-10) claims, p. 4, lower left column, line 2 to lower right column, line 1, example 2, experiment no. 10, example 3, experiment no. 21 | 1, 4-8 |
| Y | | 9 |
| X | JP 2010-100696 A (MITSUBISHI RAYON CO) 06 May 2010 (2010-05-06) claims, paragraphs [0021], [0023], [0026]-[0028], example 1 | 1-8 |
| Y | | 9 |
| X | JP 2013-166917 A (TORAY KK) 29 August 2013 (2013-08-29) claims, paragraphs [0017]-[0018], [0039], [0041], [0044], [0074], [0085], [0089], example 23, table 3 | 8-9 |
| Y | | 9 |
| A | JP 9-511537 A (PPG INDUSTRIES, INC) 18 November 1997 (1997-11-18) entire text | 1-9 |

Form PCT/ISA/210 (second sheet) (January 2015)

**INTERNATIONAL SEARCH REPORT**
**Information on patent family members**

International application No.
**PCT/JP2022/007767**

| Patent document cited in search report | Publication date (day/month/year) | Patent family member(s) | Publication date (day/month/year) |
|---|---|---|---|
| JP 60-6722 A | 14 January 1985 | (Family: none) | |
| JP 62-252417 A | 04 November 1987 | (Family: none) | |
| JP 62-246924 A | 28 October 1987 | (Family: none) | |
| JP 54-144499 A | 10 November 1979 | (Family: none) | |
| JP 2010-100696 A | 06 May 2010 | (Family: none) | |
| JP 2013-166917 A | 29 August 2013 | (Family: none) | |
| JP 9-511537 A | 18 November 1997 | EP 754200 A1<br>entire text<br>KR 10-1997-0702312 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010276146 A
- WO 2017175775 A
- WO 2016084475 A